(19) Europäisches Patentamt
European Patent Office
Office européen des brevets

(11) EP 0 980 872 A2

(12) **EUROPÄISCHE PATENTANMELDUNG**

(43) Veröffentlichungstag:
**23.02.2000 Patentblatt 2000/08**

(51) Int. Cl.[7]: **C07F 17/00**, C07F 7/28, C08F 10/00

(21) Anmeldenummer: **99115111.9**

(22) Anmeldetag: **09.08.1999**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(30) Priorität: **20.08.1998 DE 19837734**

(71) Anmelder:
**Bayer Aktiengesellschaft**
**51368 Leverkusen (DE)**

(72) Erfinder:
- **Beckhaus, Rüdiger, Prof. Dr.**
  **26131 Oldenburg (DE)**
- **Heinrichs, Jürgen**
  **52064 Aachen (DE)**
- **Becke, Sigurd, Dr.**
  **51503 Rösrath (DE)**

(54) **Katalysatoren auf Basis von Fulven-Metallkomplexen**

(57) Verfahren zur Herstellung von Fulven-Metall-Insertionskomplexen neue Fulven-Metall-Insertionskomplexe sowie deren Verwendung als Katalysator zur Polymerisation von Olefinen und/oder Dienen und als Hydrierkatalysator.

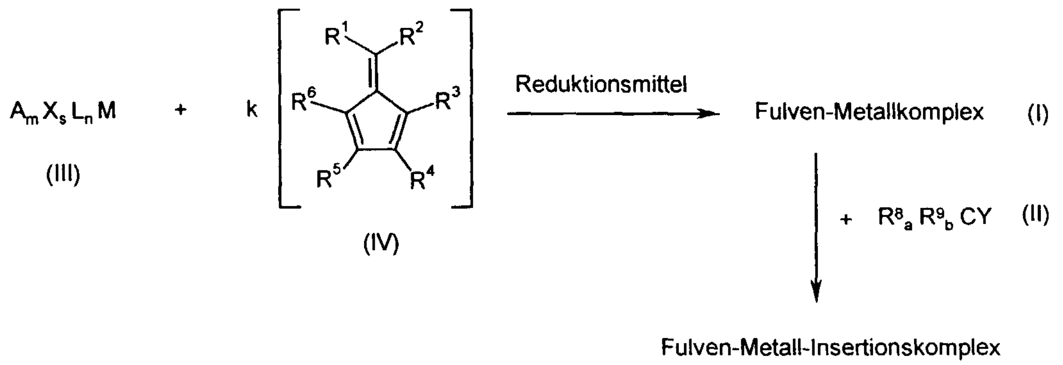


EP 0 980 872 A2

## Beschreibung

Die vorliegende Erfindung betrifft Katalysatoren auf Basis von Fulven-Metallkomplexen, Verfahren zu deren Herstellung, sowie deren Verwendung für die Polymerisation und Copolymerisation von Olefinen und/oder Dienen.

Metallkomplexe mit Cyclopentadienylliganden sind seit der Entdeckung des Ferrocens intensiv untersucht worden. Die Verwendung von Biscyclopentadienyl-Metallkomplexen (Metallocenen), im Gemisch mit aktivierenden Cokatalysatoren, bevorzugt Alumoxanen, zur Polymerisation von Olefinen und Diolefinen ist seit langem bekannt (z.B. EP-A 69 951, 129 368, 351 392, 485 821, 485 823). Die Metallocene haben sich als hoch wirksame, spezifische Katalysatoren bei der Polymerisation von Olefinen erwiesen. Auch Metallkomplexe mit nur einem Cyclopentadienylliganden (Halbsandwichkomplexe) sind in Kombination mit Cokatalysatoren als spezifische Polymerisationskatalysatoren geeignet (US 5 132 380, EP 416 815, WO 91/04257, WO 96/13529). Zur Steigerung der Aktivität, Selektivität, Steuerung der Mikrostruktur, der Molgewichte und der Molgewichtsverteilung wurden daher in den letzten Jahren eine Vielzahl neuer Metallocen-Katalysatoren bzw. Halbsandwich-Katalysatoren für die Polymerisation von olefinischen Verbindungen entwickelt. Metallkomplexe mit Cyclopentadienylliganden, insbesondere chirale ansa-Metallocene sind auch als Hydrierkatalysatoren, z. B. für Olefine oder Imine beschrieben (J. Am. Chem. Soc. 1993, 115, 12569; J. Am. Chem. Soc. 1994, 116, 8952-8965). Chirale Metallocene werden auch in der asymmetrischen Synthese, z. B. Für asymmetrische Diels-Alder Reaktionen als Katalysatoren eingesetzt (J. Chem. Soc. Chem. Commun. 1995, 1181).

Über Metallkomplexe mit Fulvenliganden ist vergleichsweise wenig bekannt.

Nach Bercaw et al., JACS (1972), 94, 1219 entsteht durch Thermolyse von Bis($\eta^5$-pentamethylcyclopentadienyl)titandimethyl der Fulvenkomplex ($\eta^6$-2,3,4,5-Tetramethylcyclopentadienyl-1-methylen)( $\eta^5$-pentamethylcyclopentadienyl)titanmethyl. In T. J. Marks et al., JACS (1988), 110, 7701 wird die Thermolyse von Pentamethylcyclopentadienyl-Komplexen des Zirconiums und Hafniums beschrieben. Durch Thermolyse von Bis($\eta^5$-pentamethylcyclopentadienyl)zir-coniumdiphenyl entsteht der Fulvenkomplex ($\eta^6$-2,3,4,5-Tetramethylcyclopentadienyl-1-methylen)($\eta^5$-pentamethylcyclopentadienyl)zirconiumphenyl. Die Herstellung von Fulvenkomplexen nach dem thermischen Verfahren ist auf wenige Strukturvarianten beschränkt. Das thermische Verfahren führt nicht immer zu einheitlichen Produkten.

In einer älteren Anmeldung werden Fulven-Metallkomplexe und ein Verfahren zur deren Herstellung beschrieben (DE-Anmeldung 19 756 742.8). Durch Umsetzung einer Fulvenverbindung mit einem geeigneten Übergangsmetallkomplex in Gegenwart eines Reduktionsmittels sind Fulven-Metallkomplexe in hohen Ausbeuten zugänglich, die nicht nach dem thermischen Verfahren hergestellt werden können. Die direkte Einführung des Fulvenliganden ermöglicht den Zugang zu einer Vielzahl neuer Fulven-Metallkomplexen. In Kombination mit Cokatalysatoren entstehen spezifische Polymerisationskatalysatoren, deren Katalysatoraktivität vergleichbar ist mit der Aktivität von Katalysatoren auf Basis von Metallocenen.

Ein Verfahren zur thermischen Herstellung von Fulven-Metallkomplexen und deren Verwendung als Polymerisationskatalysatoren in Verbindung mit Cokatalysatoren wird in der älteren Anmeldung DE 19 732 804.0 beschrieben.

Von Nachteil ist, daß Fulven-Metallkomplexe extrem luft- und feuchtigkeitsempfindlich sind. Daher müssen Fulven-Metallkomplexe unter Inertgasbedingungen hergestellt und aufbewahrt werden.

Über das Reaktionsverhalten von Fulven-Metallkomplexen ist wenig bekannt. In Z. Naturforseh. 44 b, 1989, 1593-1598 wird die Reaktion von Aldehyden und Ketonen mit der Komplexverbindung ($\eta^6$-Cyclopentadienyl-1-methylen)($\eta^5$-methylcyclopentadienyl)phenyltitan beschrieben. Die Reaktion von Isonitrilen mit Pentamethylcyclopentadienyl-tetramethylfülvenkomplexen des Titan und Zirkonium ist in Organometallics 1991, 10, 2665-2671 beschrieben. In Organometallics, 1991, 10, 1637-1639 wird die Umsetzung von ($\eta^6$-2,3,4,5-Tetramethylyclopentadienyl-1-methylen)($\eta^5$-pentamethylcyclopentadienyl)titanchlorid mit Acetophenon beschrieben. Die dabei entstehenden Reaktionsprodukte sind nicht eindeutig charakterisiert. Die oben beschriebenen Reaktionen sind beschränkt auf Fulvenmetallkomplexe, die zusätzlich einen Cyclopentadienylliganden besitzen und nach dem thermischen Verfahren hergestellt werden.

Über das Reaktionsverhalten von Fulven-Metallkomplexen, die durch die direkte Einführung eines Fulvenliganden in einen Metallkomplex hergestellt werden, ist nichts bekannt.

Aufgabe der vorliegenden Erfindung war es, neue Katalysatoren zu finden, welche die oben beschriebenen Nachteile wenigstens teilweise vermeiden.

Überraschenderweise entstehen bei der Reaktion von Fulven-Metallkomplexen mit ungesättigten Verbindungen, die ein oder mehrere Heteroatome enthalten, neue Fulven-Metall-Insertionskomplexe, die vorzüglich als Katalysatoren geeignet sind.

Gegenstand der vorliegenden Erfindung ist ein Verfahren zur Herstellung von Fulven-Metall-Insertionskomplexen, dadurch gekennzeichnet, daß man

a) einen Fulven-Metallkomplex der Formel (I)

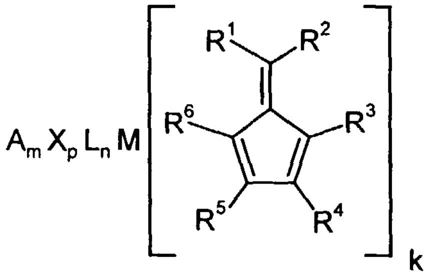

(I),

wobei

M ein Metall aus der Gruppe IIIb, IVb, Vb, VIb oder der Lanthaniden oder der Actiniden des Periodensystems der Elemente nach IUPAC ist,

A ein gegebenenfalls ein- oder mehrfach verbrückter anionischer Ligand bedeutet, wobei Cyclopentadienyl-Liganden ausgenommen sind,

X ein Wasserstoffatom, eine $C_1$- bis $C_{10}$-Alkylgruppe, eine $C_1$- bis $C_{10}$-Alkoxygruppe, eine $C_6$- bis $C_{10}$-Arylgruppe, eine $C_6$- bis $C_{10}$-Aryloxygruppe, eine $C_2$- bis $C_{10}$-Alkenylgruppe, eine $C_7$- bis $C_{40}$-Arylalkylgruppe, eine $C_7$- bis $C_{40}$-Alkylarylgruppe, eine $C_8$- bis $C_{40}$-Arylalkenylgruppe, eine $C_1$- bis $C_{10}$-Kohlenwasserstoffreste substituierte Silylgruppe, ein Halogenatom oder ein Amid der Formel $NR^7{}_2$ bedeutet,

L ein Neutralligand bedeutet,

$R^1$, $R^2$, $R^3$, $R^4$, $R^5$, $R^6$ gleich oder verschieden sind und stehen für Wasserstoff, Halogen, eine Cyanogruppe, eine $C_1$- bis $C_{20}$-Alkylgruppe, eine $C_1$- bis $C_{10}$-Fluoralkylgruppe, eine $C_6$- bis $C_{10}$-Fluorarylgruppe, eine $C_1$- bis $C_{10}$-Alkoxygruppe, eine $C_6$- bis $C_{20}$-Arylgruppe, eine $C_6$-bis $C_{10}$-Aryloxygruppe, eine $C_2$- bis $C_{10}$-Alkenylgruppe, eine $C_7$-bis $C_{40}$-Arylalkylgruppe, eine $C_7$- bis $C_{40}$-Alkylarylgruppe, eine $C_8$-bis $C_{40}$-Arylalkenylgruppe, eine $C_2$ bis $C_{10}$-Alkinylgruppe, eine durch $C_1$-$C_{10}$-Kohlenwasserstoffreste substituierte Silylgruppe, eine durch einen $C_1$-$C_{10}$-Kohlenwasserstoffrest substituierte Sulfidgruppe, eine gegebenenfalls durch $C_1$-$C_{20}$-Kohlenwasserstoffreste substituierte Aminogruppe,
oder

$R^1$, $R^2$, $R^3$, $R^4$, $R^5$, $R^6$ jeweils zusammen mit den sie verbindenden Atomen ein oder mehrere aliphatische oder aromatische Ringsysteme bilden, welche ein oder mehrere Heteroatome (O, N, S) enthalten können und 5 bis 10 Kohlenstoffatome aufweisen,

$R^7$ steht für Wasserstoff, eine $C_1$- bis $C_{20}$-Alkylgruppe, eine $C_6$- bis $C_{20}$-Arylgruppe, eine $C_7$- bis $C_{40}$-Arylalkylgruppe, eine $C_7$- bis $C_{40}$-Alkylarylgruppe, eine durch $C_1$-$C_{10}$-Kohlenwasserstoffreste substituierte Silylgruppe, eine gegebenenfalls durch $C_1$ -$C_{20}$-Kohlenwasserstoffreste substituierte Aminogruppe,

m, p die Zahlen 0, 1, 2, 3 oder 4 darstellen, die sich aus der Valenz und dem Bindungszustand von M ergeben, sowie

k die Zahl 1, 2 oder 3 darstellt und die Summe von k + m + p in Abhängigkeit von der Oxidationsstufe von M 1 bis 5 beträgt,

n eine Zahl von 0 bis 10 ist,

mit

b) einer ungesättigten Verbindung der Formel (II)

$$R^8{}_aR^9{}_bCY \quad \text{(II)},$$

wobei

$R^8$, $R^9$ gleich oder verschieden sind, ein Wasserstoffatom, ein Halogenatom, eine Hydroxygruppe, eine $C_1$- bis $C_{10}$-Alkylgruppe, eine $C_1$- bis $C_{10}$-Alkoxygruppe, eine gegebenenfalls durch Halogenatome substituierte $C_6$- bis $C_{10}$-Arylgruppe, eine $C_6$- bis $C_{10}$-Aryloxygruppe, eine $C_2$- bis $C_{10}$-Alkenylgruppe, eine $C_7$- bis $C_{40}$-Arylalkylgruppe, eine $C_7$- bis $C_{40}$-Alkylarylgruppe, eine $C_8$- bis $C_{40}$-Arylalkenylgruppe, eine gegebenenfalls durch $C_1$-$C_{20}$-Kohlenwasserstoffreste substituierte Aminogruppe oder eine gegebenenfalls durch $C_1$-$C_{20}$-Kohlenwasserstoffreste substituierte Iminogruppe bedeuten,

Y ein stickstoffatom, ein Sauerstoffatom, ein Schwefelatom oder eine Gruppe der Formel $NR^{10}$ bedeutet, wobei $R^{10}$ die gleiche Bedeutung wie $R^8$ und $R^9$ hat und

a, b die Zahlen 0 oder 1 darstellen,

umsetzt, sowie die gemäß diesem Verfahren herstellbaren Fulven-Metall-Insertionskomplexe.

Die Herstellung der erfindungsgemäßen Fulven-Metall-Insertionskomplexe soll durch das nachfolgende Reaktionschema veranschaulicht werden:

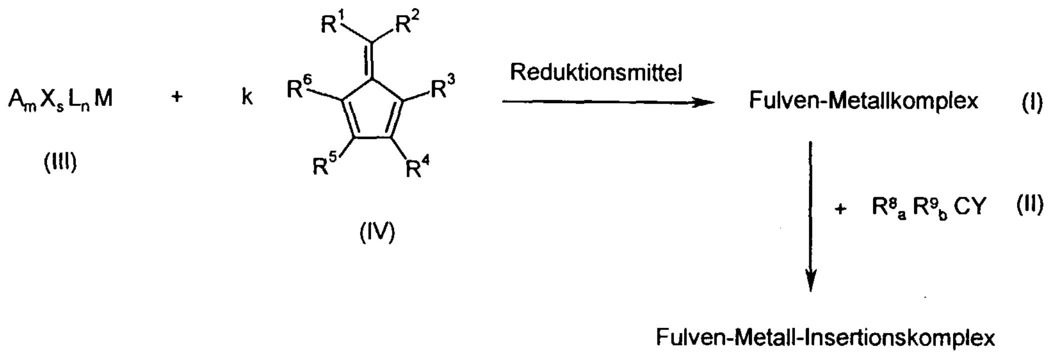


Als ungesättigte Verbindungen der Formel (II) kommen bevorzugt Verbindungen der Formel (IIa) in Frage,

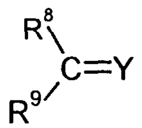
(IIa)

wobei

$R^8$, $R^9$ und Y die zuvor genannte Bedeutung haben und gegebenenfalls $R^8$ und $R^9$ mit dem sie verbindenden Kohlenstoffatom ein Ringsystem bilden, welches ein oder mehrere Heteroatome (O, N, S) enthalten kann,

oder Verbindungen der Formel (IIb),

$$R^{11}\text{-C}{\equiv}\text{N} \quad \text{(IIb)}$$

oder Verbindungen der Formel (IIc),

$$\text{C}{\equiv}\text{N-}R^{11} \quad \text{(IIc)}$$

oder Verbindungen der Formel (IId)

$$R^{11}\text{-N=C=Y} \quad \text{(IId)}$$

wobei Y für ein Sauerstoffatom oder Schwefelatom steht und

$R^{11}$ ein Wasserstoffatom, eine $C_1$- bis $C_{10}$-Alkylgruppe, eine gegebenenfalls durch Halogenatome substituierte $C_6$- bis $C_{10}$-Arylgruppe, eine $C_7$- bis $C_{40}$-Arylalkylgruppe oder eine $C_7$- bis $C_{40}$-Alkylarylgruppe bedeutet.

Besonders bevorzugt sind die Verbindungen der Formel (IIa), wobei Y für ein Sauerstoffatom steht und $R^8$ und $R^9$ die zuvor genannte Bedeutung haben. Hierzu gehören Aldehyde, wie z. B. Formaldehyd, Acetaldehyd, Propionaldehyd, n-Butyroaldehyd, Isobutylaldehyd, Pivalinaldehyd, Octanal, Octadecenal, Acrolein, Crotonaldehyd, Benzaldehyd, Furfurol und Dialdehyde, wie z. B. Glyoxal, und Ketone, wie z.B. Aceton, Methylethylketon, Diethylketon, Hexanon-(2), Hexanon-(3), Methyl-tert.-butylketon, Di-n-propylketon, Diisopropylketon, Diisobutylketon, Di-tert.-butylketon, Dicyclohexylketon, Methylcyclohexylketon, Diamylketon, Heptadecylphenylketon, Mesityloxid, Phoron, Isophoron, Acetophenon, 4-Fluoracetophenon, 3,5-Di(trifluormethyl)acetophenon, Pentamethylacetophenon, Benzophenon, 4,4'-Difluorbenzophenon, Decafluoro-benzophenon, Benzalaceton, Desoxybenzoin, Cyclohexanon, Menthon, Campher, Fluorenon,und Diketone, wie z. B. Diacetyl, Acetylaceton, und Carbonsäureester, wie z.B. Essigsäureethylester, Benzoesäurebenzylester.

Zu den bevorzugten Verbindungen der Formel (IIb) gehören Nitrile, wie z.B. Acetonitril, n-Butyronitril, 4-Chlorphenylnitril, Pivalinsäurenitril und Zimtsäurenitril. Zu den bevorzugten Verbindungen der Formel (IIc) gehören Isonitrile, wie z.B. 2,6-Di-methylphenylisonitril. Zu den bevorzugten Verbindungen der Formel (IId) gehören Isocyanate und Thioisocyanate, wie z. B. Cyclohexylisocyanat, Methylisothiocyanat.

Weiterhin bevorzugte Verbindungen der Formel (II) sind ungesättigte Verbindungen der Formel (IIa), wobei Y eine Gruppe der Formel $NR^{10}$ bedeutet und $R^8$, $R^9$ die zuvor genannte Bedeutung haben. Hierzu gehören Imine, wie z.B. Acetophenonbenzylimin und Hydrazone, wie z. B. Acetophenonhydrazon.

Der Prozeß zur Herstellung der erfindungsgemäßen Fulven-Metall-Insertionskomplexe erfolgt in einem geeigneten Reaktionsmedium bei Temperaturen von -100 bis +250°C, bevorzugt von -78 bis +130°C, besonders bevorzugt von -10 bis +60°C.

Als geeignete Reaktionsmedien kommen beispielsweise aliphatische oder aromatische Kohlenwasserstoffe, halogenierte Kohlenwasserstoffe, Ether und cyclische Ether in Frage. Beispiele hierfür sind unverzweigte aliphatische Kohlenwasserstoffe, wie Butan, Pentan, Hexan, Heptan, Octan, verzweigte aliphatische Kohlenwasserstoffe, wie Isobutan, Isopentan, Isohexan, cyclische aliphatische Kohlenwasserstoffe, wie Cyclohexan, Methylcyclohexan, aromatische Kohlenwasserstoffe, wie Benzol, Toluol und Xylol. Bevorzugt sind Ether wie Dialkylether, Dimethoxyethan und besonders bevorzugt Tetrahydrofuran. Auch Mischungen verschiedener Lösungsmittel sind geeignet.

Die Herstellung der erfindungsgemäßen Fulven-Metall-Insertionskomplexe erfolgt unter Ausschluß von Luft und Wasser unter Inertgasbedingungen (Schutzgastechnik). Beispiele für Inertgase sind Stickstoff oder Argon. Als Schutzgastechnik ist beispielsweise die im allgemeinen für metallorganische Substanzen übliche Schlenk-Technik geeignet.

Die Herstellung der Fulvenmetallkomplexe (I) kann beispielsweise so erfolgen, daß man eine Übergangsmetallverbindung der Formel (III)

$$A_mX_sL_nM \quad \text{(III),}$$

wobei

A, X, L, M, m und n die zuvor genannte Bedeutung besitzen und

s die Zahl 2, 3, 4, 5 oder 6 bedeutet und s > p ist

mit einer Fulvenverbindung der Formel (IV)

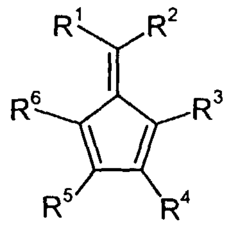

(IV),

wobei

$R^1$, $R^2$, $R^3$, $R^4$, $R^5$ und $R^6$ die zuvor genannte Bedeutung besitzen,

in Gegenwart eines Reduktionsmittels umsetzt.

Die Herstellung der Fulven-Metallkomplexe der Formel (I) kann in einem einzigen Reaktionsschritt erfolgen, d. h. in einer Eintopfreaktion, wobei die Reihenfolge der Zugabe der einzelnen Reaktionskomponenten nicht festgelegt ist. Die Fulven-Metallkomplexe der Formel (I) können isoliert werden und anschließend in einem separaten Reaktionschritt mit ungesättigten Verbindungen der Formel (II) umgesetzt werden. Auf eine vorhergehende Isolierung der Fulven-Metallkomplexe der Formel (I) kann gegebenenfalls auch verzichtet werden. Das molare Verhältnis von (I) zu (II) liegt im Bereich von 100:1 bis 0,1:1, bevorzugt von 10:1 bis 0,5:1.

Als Reduktionsmittel sind beispielsweise geeignet Alkalimetalle, Erdalkalimetalle, Aluminium, Zink, Legierungen der Alkalimetalle, wie z.B. Natrium-Kalium-Legierung oder Natriumamalgam, Legierungen der Erdalkalimetalle, sowie Metallhydride. Beispiele für Metallhydride sind Lithiumhydrid, Natriumhydrid, Magnesiumhydrid, Aluminiumhydrid, Lithiumaluminiumhydrid und Natriumborhydrid. Spezielle Beispiele für Reduktionsmittel sind Natriumnaphthalenid, Kaliumgraphit, Lithiumalkyle, Magnesiumbutadien, Magnesiumanthracen, Trialkylaluminiumverbindungen und Grignardreagenzien. Bevorzugte Reduktionsmittel sind Alkalimetalle oder Erdalkalimetalle, $C_1$-$C_6$-Alkyllithium, Tri-$C_1$-$C_6$-alkylaluminiumverbindungen und Grignardreagenzien, wie z. B. Ethylmagnesium-chlorid. Besonders bevorzugte Reduktionsmittel sind Lithium, Natriumamalgam, Magnesium, n-Butyllithium, sowie Triethylaluminium und Triisobutylaluminium. Anstelle der genannten Reduktionsmittel kann auch eine elektrochemische Reduktion durchgeführt werden.

Der Prozeß zur Herstellung der Fulven-Metallkomplexe (I) erfolgt in einem geeigneten Reaktionsmedium bei Temperaturen von -100 bis +250°C, bevorzugt von -78 bis +130°C, besonders bevorzugt von -10 bis +60°C.

Als geeignete Reaktionsmedien kommen beispielsweise aliphatische oder aromatische Kohlenwasserstoffe, halogenierte Kohlenwasserstoffe, Ether und cyclische Ether in Frage. Beispiele hierfür sind unverzweigte aliphatische Kohlenwasserstoffe, wie Butan, Pentan, Hexan, Heptan, Octan, verzweigte aliphatische Kohlenwasserstoffe, wie Isobutan, Isopentan, Isohexan, cyclische aliphatische Kohlenwasserstoffe, wie Cyclohexan, Methylcyclohexan, aromatische Kohlenwasserstoffe, wie Benzol, Toluol und Xylol. Bevorzugt sind Ether wie Dialkylether, Dimethoxyethan und besonders bevorzugt Tetrahydrofuran. Auch Mischungen verschiedener Lösungsmittel sind geeignet.

Die Herstellung der erfindungsgemäßen Katalysatoren erfolgt unter Ausschluß von Luft und Wasser unter Inertgasbedingungen (Schutzgastechnik). Beispiele für Inertgase sind Stickstoff oder Argon. Als Schutzgastechnik ist beispielsweise die im allgemeinen für metallorganische Substanzen übliche Schlenk-Technik geeignet.

Als Übergangsmetallkomplexe der Formel (III) kommen insbesondere solche in Frage, in denen

M ein Metall aus der Gruppe Titan, Zirkonium, Hafnium, Vanadium, Niob, Tantal und Chrom ist,

A ein Pyrazolat der Formel $N_2C_3R^{10}{}_3$ ,wobei $R^{10}$ für Wasserstoff, eine $C_1$-$C_{10}$-Alkylgruppe oder eine $C_6$- bis $C_{10}$-Arylgruppe steht,
ein Pyrazolylborat der Formel $R^7B(N_2C_3R^{10}{}_3)_3$ ,
ein Alkoholat oder Phenolat der Formel $OR^7$,
ein Siloxan der Formel $OSiR^7{}_3$,
ein Thiolat der Formel $SR^7$,
ein Acetylacetonat der Formel $(R^7CO)_2CR^7$,
ein Diimin der Formel $(R^7N{=}CR^7)_2$,
ein Amidinat der Formel $R^7C(NR^7{}_2)_2$,
ein Cyclooctatetraenyl der Formel $C_8H_qR^7{}_{8-q}$ mit q für 0, 1, 2, 3, 4, 5, 6, 7,
wobei

$R^7$ die zuvor angegebene Bedeutung hat,

L für einen Ether, einen Thioether, einen cyclischen Ether oder cyclischen Thioether, ein Amin oder ein Phosphin steht,

X, $R^7$, m, n und s die zuvor genannte Bedeutung besitzen. Besonders bevorzugt sind Übergangsmetallkomplexe der Formel (III), in der

M für Titan, Zirkonium und Hafnium steht,

X Fluor, Chlor oder Brom bedeutet,

L für Diethylether oder Tetrahydrofuran steht

m die Zahl 0 darstellt

s die Zahlen 2, 3, oder 4 bedeutet und

n eine Zahl von 0 bis 4 ist.

Als Fulvenverbindungen kommen insbesondere solche der Formel (IV) in Frage, in der

$R^1$ bis $R^6$ für eine $C_1$-$C_{30}$-Alkylgruppe, eine $C_6$-$C_{10}$-Arylgruppe, eine $C_7$-$C_{40}$-Alkylarylgruppe, insbesondere für Wasserstoff, Methyl, Trifluormethyl, Ethyl, n-Propyl, Isopropyl, n-Butyl, Isobutyl, tert.-Butyl, Phenyl, Pentafluorphenyl, Methylphenyl, Cyclohexyl, Benzyl und Dimethylamino

steht.

Bevorzugte Verbindungen der Formel (IV) sind Fulvenverbindungen der Formel (V)

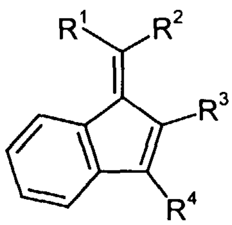

(V),

oder Fulvenverbindungen der Formel (VI)

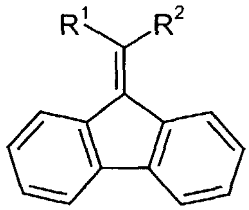

(VI),

wobei

$R^1$, $R^2$, $R^3$ und $R^4$ die zuvor genannte Bedeutung besitzen.

Besonders bevorzugte Verbindungen der Formel (IV) sind 6-Cyclohexylfulven, 6-Isopropylfulven, 6-tert-Butylfulven, 6-Phenylfulven, 6-(Dimethylamino)-fulven, 6,6-Bis(dimethylamino)fulven, 6,6-Dimethylfulven, 6,6-Bis(trifluormethyl)fulven, 6,6-Diphenylfulven, 6,6-Bis(pentafluorphenyl)fulven, 6,6-Pentamethylenfulven, 6,6-Tetramethylenfulven, 6,6-Trimethylenfulven, 2-(2,4-Cyclopentadien-1-yliden)-1,3-dithiolan, 5-Benzyliden-1,2,3-Triphenyl-1,3-cyclo-pentadien, 1,2,3,4-Tetramethylfülven, 1,2,3,4-Tetraphenylfulven, 2,3-Dimethylfulven, 2,3-Diisopropylfulven, 2,3-Diphenylfulven, 1,4-Dimethyl-2,3-diphenylfulven sowie 1,4-Diethyl-2,3-diphenylfülven.

Die Synthese der Fulvenverbindungen der Formel (IV), (V) und (VI) kann beispielsweise nach J. Org. Chem., Vo. 49, No. 11 (1984), 1849 erfolgen.

Die angegebene Formel (I) für die Fulven-Metallkomplexe ist als eine formale Darstellung der Bindungsverhältnisse zu sehen und stellt ein Beispiel einer Struktur-Variante dar. Die Bindungsverhältuisse in den Metallkomplexen sind u.a. abhängig vom Zentralatom, von der Oxidationsstufe sowie von den Substituenten des Fulven-Liganden.

Ein weiterer Gegenstand der vorliegenden Erfindung ist die Verwendung der Fulven-Metall-Insertionskomplexe zur Polymerisation von Olefinen und/oder Dienen. Die erfindungsgemäßen Katalysatoren können auch als Hydrierkatalysatoren eingesetzt werden.

Als Cokatalysatoren für Polymerisationen kommen die auf dem Gebiet der Metallocen-Katalyse bekannten Cokatalysatoren in Frage, wie polymere oder oligomere Aluminoxane, Lewissäuren sowie Aluminate und Borate. In diesem Zusammenhang wird insbesondere verwiesen auf Macromol. Symp. Vol. 97, Juli 1995, S. 1-246 (für Alumoxane) sowie auf EP 277003, EP 277004, Organometallics 1997, 16, 842-857 (für Borate), und EP 573403 (für Aluminate).

Insbesondere eignen sich als Cokatalysatoren Methylaluminoxan, durch Triisobutylaluminium modifiziertes Methylalumoxan sowie Diisobutylalumoxan, Trialkylaluminiumverbindungen, wie Trimethylaluminium, Triethylaluminium, Triisobutylaluminium, Triisooctylaluminium, darüber hinaus Dialkylaluminiumverbindungen, wie Diisobutylaluminiumhydrid, Diisobutylaluminiumfluorid und Diethylaluminiumchlorid, substituierte Triarylaluminiumverbindungen, wie Tris(pentafluorphenyl)aluminium, sowie ionische Verbindungen, die als Anion Tetrakis-(pentafluorphenyl)aluminat enthalten, wie Triphenylmethyl-tetrakis(pentafluorphenyl)aluminat, sowie N,N-Dimethylanilinium-tetrakis-(pentafluorphenyl)aluminat, substituierte Triarylborverbindungen, wie Tris-(pentafluorphenyl)bor sowie ionische Verbindungen, die als Anion Tetrakis-(pentafluorphenyl)borat enthalten, wie Triphenylmethyl-tetrakis-(pentafluorphenyl)borat, sowie N,N-Dimethylaniliniumtetrakis(pentafluorphenyl)-borat. Auch Mischungen verschiedener Cokatalysatoren sind für die Aktivierung der erfindungsgemäßen Katalysatoren geeignet.

Als Polymerisation wird dabei sowohl die Homo- als auch die Copolymerisation der Olefine und/oder Diene verstanden. Insbesondere werden bei der Polymerisation eingesetzt $C_2$-$C_{10}$-Alkene, wie Ethylen, Propylen, Buten-1, Penten-1 und Hexen-1, Octen-1, Isobutylen und Arylalkene, wie Styrol. Als Diene werden insbesondere eingesetzt: konjugierte Diene, wie 1,3-Butadien, Isopren, 1,3-Pentadien, und nicht konjugierte Diene, wie 1,4-Hexadien, 1,5-Heptadien, 5,7-Dimethyl-1,6-octadien, 4-Vinyl-1-cyclohexen, 5-Ethyliden-2-norbornen, 5-Vinyl-2-norbornen und Dicyclopentadien.

Die erfindungsgemäßen Katalysatoren eignen sich für die Herstellung von Polyethylen und von Kautschuken auf Basis von Copolymeren des Ethylens mit einem oder mehreren der genannten $\alpha$-Olefine und der genannten Diene. Darüber hinaus eignen sich die erfindungsgemäßen Katalysatoren für die Polymerisation von Cyclo-Olefinen wie Norbornen, Cyclopenten, Cyclohexen, Cyclooctan, und der Copolymerisation von Cycloolefinen mit Ethylen oder $\alpha$-Olefinen.

Die Polymerisation kann in flüssiger Phase, in Gegenwart oder Abwesenheit eines inerten Lösungsmittels, oder in der Gasphase durchgeführt werden. Als Lösungsmittel eignen sich aromatische Kohlenwasserstoffe, wie Benzol und/oder Toluol, oder aliphatische Kohlenwasserstoffe, wie Propan, Hexan, Heptan, Octan, Isobutan, Cyclohexan oder Gemische der verschiedenen Kohlenwasserstoffe.

Es ist möglich, die erfindungsgemäßen Katalysatoren auf einen Träger aufgebracht einzusetzen. Als geeignete Trägermaterialien sind z.B. zu nennen: anorganische oder organische polymere Träger, wie Silica, Zeolithe, Ruß, Aktivkohle, Aluminiumoxid, Polystyrol sowie Polypropylen.

Dabei können die erfindungsgemäßen Katalysatoren in üblicher Weise auf die Trägermaterialien aufgebracht werden. Methoden zur Trägerung von Katalysatorsystemen sind beispielsweise beschrieben in US 4 808 561, 4 912 075, 5 008 228 und 4 914 253.

Die Polymerisation wird im allgemeinen bei Drücken von 1 bis 1 000, bevorzugt 1 bis 100 bar, und Temperaturen von -100 bis +250°C, bevorzugt 0 bis +150°C, durchgeführt. Die Polymerisation kann in üblichen Reaktoren, kontinuierlich oder diskontinuierlich durchgeführt werden.

Beispielsweise kann die (Co)polymerisation von Ethylen mit oder ohne der genannten Comonomeren wie folgt durchgeführt werden: ein Stahlautoklav wird nach den üblichen Reinigungsoperationen mit einem Lösungsmittel und einem Scavenger, z.B. Triisobutylaluminium oder Methylaluminoxan befüllt. Durch den Scavenger werden mögliche Verunreinigungen und Katalysatorgifte, z.B. Wasser oder andere sauerstoffhaltigen Verbindungen unschädlich gemacht. Anschließend wird der Reaktor mit Monomeren bis zu einem bestimmten Druck befüllt, auf eine ausgewählte Temperatur thermostatisiert und die Polymerisation durch Zugabe des voraktivierten Katalysators gestartet. Die Voraktivierung kann zum Beispiel durch Rühren einer Mischung des Katalysators mit einem Cokatalysator, z.B. Methylaluminoxan in einem definierten Mengenverhältnis in einem Lösungsmittel erfolgen. Die Polymerisation kann in einem kontinuierlichen oder diskontinuierlichen Prozeß durchgeführt werden.

Die Erfindung wird anhand der nachstehenden Beispiele näher erläutert.

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert. Die Verbindungen wurden mit $^1H$-NMR, $^{13}C$-NMR und Massenspektroskopie charakterisiert.

Polymercharakterisierung: Die DSC-Messungen erfolgten an einem Gerät der Firma Perkin-Elmer mit der Bezeichnung Differential-Scanning-Calorimeter DSC-2 nach folgender Vorschrift: zwei Aufheizungen -90°C, bis +180°C, Heizrate 20 K/min, schnelle Abkühlung mit 320 K/min auf -90°C, Stickstoffspülung, Einwaagen 12,3 mg Probenmasse in Normkapseln. Die IR-spektroskopische Ermittlung der Polymerzusammensetzung erfolgte gemäß ASTM D 3900.

Abkürzungen:

| | |
|---|---|
| THF | Tetrahydrofuran |
| RT | Raumtemperatur |
| HV | Hochvakuum |
| MS | Massenspektrum |
| MAO | Methylaluminoxan |
| dH | Schmelzenthalpie (DSC-Messung) |
| Tg | Glastemperatur (DSC-Messung) |

**<u>Beispiel 1</u>**

**Reaktion von 6,6-Dimethylfulven mit $TiCl_4$ • 2 THF in Gegenwart von Magnesium und anschließende Umsetzung mit Benzophenon zu Verbindung <u>1</u>**

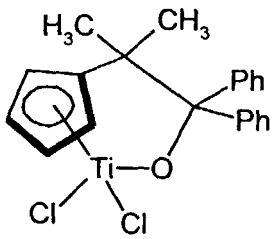

**<u>1</u>**

In 25 ml THF wurde $TiCl_4$ • 2 THF (710 mg, 2.13 mmol) und 1 Äquivalent Magnesium (52 mg, 2.13 mmol) vorgelegt. Hierzu tropfte man bei RT 1.01 Äquivalent 6,6-Dimethylfulven (230 mg, 2.16 mmol) zu. Man ließ über Nacht bei RT rühren, so daß alles Magnesium verbraucht wurde. Nach langsamen Zutropfen einer Lösung von Benzophenon (0.387g, 2.13 mmol) in 5 ml THF rührte man für 2 h bei RT, entfernte das Lösungsmittel im HV und nahm in Toluol auf Man filtrierte den Feststoff ab und engte die Lösung bis auf 10 ml ein. Durch Zugabe von 20 ml Hexan konnte ein roter Feststoff ausgefällt werden. Zum weiteren Auskristallisieren wurde auf -20°C abgekühlt. Der Feststoff wurde isoliert und im HV getrocknet. Man erhielt 230 mg (27 %) Verbindung **<u>1</u>** als dunkelroten Feststoffs, der NMR- und massenspektroskopisch charakterisiert wurde.

> $^1H$-NMR: ($C_6D_6$, 300 MHz): $\delta$ = 0.92 (s, 6H, $C(CH_3)_2$), 5.79 (dd, 2H, $^2J(H,H)$ = 2.69 Hz, $C_5\underline{H}_4$), 6.81 (dd, 2H, $^2J(H,H)$ = 2.69 Hz, $C_5\underline{H}_4$), 7.03-7.26 (m, 6H, $C_6H_5$), 7.70-7.75 (m, 4H, $C_6\underline{H}_5$) ppm.
> $^{13}C$-NMR: ($C_6D_6$, 75 MHz) : $\delta$ = 27.89 ($C(\underline{C}H_3)_2$), 45.23 ($\underline{C}(CH_3)_2$), 115.09 / 116.39/ 119.83 / 120.49 ($\underline{C}_4H_4$), 112.74 / 128.53 / 130.33 / 132.31 (o,m,p- $\underline{C}_6H_5$), 138.33 (ipso-$\underline{C}_5H_4$), 144.45 (i-$\underline{C}_6H_5$) ppm.
> MS: (70eV) m/e : 406 (2) [$M^+$], 372 (5) [$M^+$-HCl], 330 (30) [$M^+$-Ph], 224 (25) [$M^+$-$OCPh_2$], 182 (65) [$OCPh_2$], 105 (100) [6,6-Dimethylfulven], 77 (70) [Ph].

**Beispiel 2**

**Polymerisation von Ethylen**

In einen 1,4-l-Stahl-Autoklaven wurden 500 ml Toluol und 1 ml einer 10 %igen Lösung von MAO in Toluol vorgelegt und auf 25°C temperiert. Anschließend wurde Ethylen zudosiert, bis der Reaktorinnendruck auf 6 bar anstieg. Voraktivierung des Katalysators: eine Lösung von 2,0 mg des dunkelroten Feststoffs aus Beispiel 1 in 2,5 ml Toluol wurde 10 Minuten mit 2 ml einer 10 %igen Lösung von MAO in Toluol bei RT gerührt. Durch Zugabe der voraktivierten Katalysatorlösung (5 µmol Titan) wurde die Polymerisation gestartet. Nach einer Polymerisationsdauer von 30 min bei 25°C und 7 bar wurde der Autoklav entspannt, die Polymerisation mit einer 1 %igen HCl-Lösung in Methanol abgestoppt und 1 h gerührt. Das so erhaltene Polymer wurde abfiltriert, mit Methanol gewaschen, isoliert und 20 h bei 60°C im Vakuum getrocknet. Man erhielt 26,5 g hochkristallines Polyethylen. Der DSC-Schmelzpunkt der 1. Aufheizung betrug 147,1°C (dH = 251,8 J/g), der der 2. Aufheizung 135,9°C (dH = 144 J/g).

**Beispiel 3**

**Coplymerisation von Ethylen und 1-Hexen**

In einen 1,4-l-Stahl-Autoklaven wurden 500 ml Toluol, 20 ml 1-Hexen und 1 ml einer 10 %igen Lösung von MAO in Toluol vorgelegt. Diese Lösung wurde auf 40°C temperiert. Anschließend wurde Ethylen zudosiert, bis der Reaktorinnendruck auf 6 bar anstieg. Voraktivierung des Katalysators: eine Lösung von 4,0 mg des Produktes aus Beispiel 1 in 5 ml Toluol wurde 10 Minuten mit 5 ml einer 10 %igen Lösung von MAO in Toluol bei RT gerührt. Durch Zugabe der voraktivierten Katalysatorlösung (10 µmol Titan) wurde die Polymerisation gestartet. Nach einer Polymerisationsdauer von 60 min bei 40°C und 6 bar wurde der Autoklav entspannt, die Polymerisation mit einer 1 %igen HCl-Lösung in Methanol abgestoppt und 1 h gerührt. Das so erhaltene Polymer wurde abfiltriert, mit Methanol gewaschen, isoliert und 20 h bei 60°C im Vakuum getrocknet. Es wurden 22,2 g eines Ethylen/1-Hexen Copolymers erhalten. Der DSC-Schmelzpunkt der 2. Aufheizung betrug 118°C (dH = 112,5 J/g), die DSC-Messung ergab einen Tg bei -20,5°C.

**Beispiel 4**

**Reaktion von 2,3,4,5-Tetramethylfulven mit $TiCl_4$ • 2 THF in Gegenwart von Magnesium und anschließende Umsetzung mit Benzophenon zu Verbindung 2**

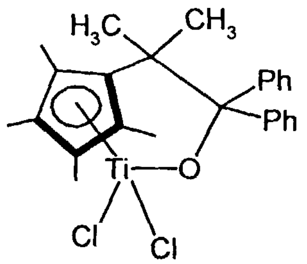

2

$TiCl_4$ • 2 THF (510 mg, 1.53 mmol) und Magnesium (37 mg, 1.53 mmol) wurden in 10 ml THF vorgelegt. Zu dieser Lösung wurde 1.05 Äquivalente 2,3,4,5-Tetramethylfulven (215 mg, 1.60 mmol) zugetropft. Man ließ über Nacht rühren, so daß das Magnesium vollständig verbraucht wurde. Die Zugabe von Benzophenon (0.280 g, 1.53 mmol) in 5 ml THF erfolgte bei RT, nach 2 h engte man im HV zur Trockne ein, nahm in 30 ml Hexan auf und filtrierte vom Magnesiumchlorid ab. Durch Einengen auf die Hälfte des Volumens und anschließender Kristallisation bei - 20°C erhielt man 280 mg (42 %) Verbindung **2** eines braunroten Feststoffs, der NMR- und massenspektroskopisch charakterisiert wurde.

$^1$H-NMR: ($C_6D_6$, 300 MHz): δ = 1.69 ( s, 6H, $C_5(C\underline{H}_3)_4$ ), 1.95 ( s, 6H, $C_5(C\underline{H}_3)_4$ ), 3.94 (s, 2H, -$C\underline{H}_2$-), 6.91 ( m, 4H, $C_6\underline{H}_5$), 7.13 (m, 4H, $C_6\underline{H}_5$), 7.56 ( m, 2H, $C_6\underline{H}_5$) ppm.
$^{13}$C-NMR: ($C_6D_6$, 75 MHz): δ = 13.05, 14.18 ($C_5(\underline{C}H_3)_4$ ), 44.04 (-$\underline{C}H_2$-), 124.67, 127.38, 128.97 (o,m,p-$\underline{C}_6H_5$),

118.04, 128.88, 130.42 ($\underline{C}_5(CH_3)_4$ ), 149.27 (i-$\underline{C}_6H_5$) ppm.

MS: (70eV) m/e : 434 (10) [$M^+$], 356 (5) [$M^+$-Ph], 332 (100) [$M^+$-2HCl-2$CH_3$], 316 (10) [$M^+$-$TiCl_2$], 252 (30) [$M^+$-$OCPh_2$], 182 (35) [$OCPh_2$], 135 (25) [$C_5(CH_3)_4$=$CH_2$], 77 (65) [Ph].

**Beispiel 5**

**Reaktion von 6,6-Dimethylfulven mit $TiCl_4$ • 2 THF in Gegenwart von Magnesium und anschließende Umsetzung mit 4-Fluorphenylmethylketon**

710 mg (2,13 mmol) $TiCl_4$ • 2 THF und 51,4 mg (2,13 mmol) Magnesium wurden in 25 ml THF vorgelegt. Zu dieser Lösung wurden bei RT 0,26 ml (2,16 mmol) 6,6-Dimethylfulven zugetropft. Man ließ über Nacht bei RT rühren, so daß das Magnesium vollständig verbraucht wurde. Nach langsamen Zutropfen einer Lösung von 294 mg (2,13 mmol) 4-Fluorphenylmethylketon in 5 ml THF und 2 h Rühren engte man im HV zur Trockne ein, nahm in 25 ml Toluol auf und filtrierte vom Magnesiumchlorid ab. Durch Einengen auf die Hälfte des Volumens und anschließender Kristallisation bei -20°C erhielt man 242 mg eines dunkelbraunen kristallinen Feststoffs.

**Beispiel 6**

**Polymerisation von Ethylen**

In einen 250 ml Glasreaktor wurden 100 ml Toluol und 5 ml einer 10 %igen Lösung von Methylalumoxan (MAO) vorgelegt. Anschließend wurde mit einem Gaseinleitungsrohr kontinuierlich bei 1,1 bar Druck Ethylen in die Lösung eingeleitet. Die Polymerisation wurde durch Zugabe einer Lösung von 4,4 mg des Produktes aus Beispiel 5 in 5 ml Toluol gestartet. Bei einer Temperatur von 40°C und einem Ethylendruck von 1,1 bar wurde die Reaktion nach 10 min Polymerisationsdauer durch Zugabe von 10 ml Methanol abgestoppt, das entstandene Polymer abfiltriert, mit Methanol gewaschen und im Vakuumtrockenschrank getrocknet. Es wurden 0,96 g Polyethylen erhalten.

**Beispiel 7**

**Reaktion von 6,6-Dimethylfulven mit $TiCl_4$ • 2 THF in Gegenwart von Magnesium und anschließende Umsetzung mit 3,3-Dimethyl-2-butanon**

384,8 mg (1,15 mmol) $TiCl_4$ • 2 THF und 28 mg (1,15 mmol) Magnesium wurden in 15 ml THF vorgelegt. Zu dieser Lösung wurden bei RT 0,14 ml (1,16 mmol) 6,6-Dimethylfulven zugetropft. Man ließ über Nacht bei RT rühren, so daß das Magnesium vollständig verbraucht wurde. Nach langsamen Zutropfen einer Lösung von 115 mg (1,15 mmol) 3,3-Dimethyl-2-butanon in 2,5 ml THF und nach 2 h Rühren engte man im HV zur Trockne ein und nahm den Rückstand in 28,8 ml Toluol auf. Man erhielt eine Suspension mit einem Gehalt von 40 µmol Titan/ml.

**Beispiel 8**

**Polymerisation von Ethylen**

Die Polymerisation aus Beispiel 6 wurde wiederholt, mit dem Unterschied, daß als Katalysator die Suspension aus Beispiel 7 anstelle des Produktes aus Beispiel 5 eingesetzt wurde. Die Polymerisation wurde durch Zugabe von 0,25 ml der Suspension aus Beispiel 7 (10 µmol Titan) gestartet. Man erhielt 1,71 g Polyethylen.

**Beispiel 9**

**Reaktion von 6,6-Diphenylfulven mit $TiCl_4$ • 2 THF in Gegenwart von Magnesium und anschließende Umsetzung mit 3,3-Dimethyl-2-butanon**

710 mg (2,13 mmol) $TiCl_4$ • 2 THF und 51,4 mg (2,13 mmol) Magnesium wurden in 20 ml THF vorgelegt. Zu dieser Lösung wurden bei RT 490,6 mg (2,13 mmol) 6,6-Diphenylfulven zu. Man ließ über Nacht bei RT rühren, so daß das Magnesium vollständig verbraucht wurde. Nach langsamen Zutropfen einer Lösung von 213 mg (2,13 mmol) 3,3-Dimethyl-2-butanon in 5 ml THF und nach 2 h Rühren engte man im HV zur Trockne ein und nahm den Rückstand in 25 ml Toluol auf. Man erhielt eine Suspension mit einem Gehalt von 42,6 µmol Titan/ml.

**Beispiel 10**

**Polymerisation von Ethylen**

In einen 250 ml Glasreaktor wurden 90 ml n-Hexan und 0,5 ml einer 2 molaren Lösung von Trimethylaluminium in Toluol und eine Lösung von 18,4 mg (20 µmol) CPh3[B(C6F5)4] in 10 ml Toluol vorgelegt. Anschließend wurde mit einem Gaseinleitungsrohr kontinuierlich bei 1,1 bar Druck Ethylen in die Lösung eingeleitet. Die Polymerisation wurde durch Zugabe von 0,23 ml der Suspension aus Beispiel 9 (10 µmol Titan) gestartet. Bei einer Temperatur von 40°C und einem Ethylendruck von 1,1 bar wurde die Reaktion nach 15 min Polymerisationsdauer durch Zugabe von Methanol abgestoppt, das entstandene Polymer abfiltriert, mit Aceton gewaschen und im Vakuumtrockensehrank getrocknet. Es wurden 2,14 g Polyethylen erhalten.

**Beispiel 11**

**Polymerisation von Ethylen**

In einen 1,4-l-Stahl-Autoklaven wurden 500 ml n-Hexan und 5 ml einer 10 %igen Lösung von MAO in Toluol vorgelegt und auf 40°C temperiert. Anschließend wurde Ethylen zudosiert, bis der Reaktorinnendruck auf 6 bar anstieg. Voraktivierung des Katalysators: 0,23 ml der Suspension aus Beispiel 9 wurde 10 Minuten mit 5 ml einer 10 %igen Lösung von MAO in Toluol bei RT gerührt. Durch Zugabe der voraktivierten Katalysatorlösung (10 µmol Titan) wurde die Polymerisation gestartet. Nach einer Polymerisationsdauer von 10 min bei 40°C und 6 bar wurde der Autoklav entspannt, die Polymerisation mit einer 1 %igen HCl-Lösung in Methanol abgestoppt und 1 h gerührt. Das so erhaltene Polymer wurde abfiltriert, mit Methanol gewaschen, isoliert und 20 h bei 60°C im Vakuum getrocknet. Man erhielt 13,6 g hochkristallines Polyethylen. Der DSC-Schmelzpunkt der 1. Aufheizung betrug 145,4°C (dH = 215 J/g), der der 2. Aufheizung 135,9°C (dH = 138 J/g).

**Beispiel 12**

**Copolymerisation von Ethylen und Propylen**

In einen 1,4-l-Stahl-Autoklaven, der mit einem mechanischen Rührer, Manometer, Temperaturfühler, einer Temperatursteuervorrichtung, einer Katalysatorschleuse und Monomerdosiervorrichtungen für Ethylen und Propylen ausgestattet ist, wurden 500 ml Hexan und 5 ml einer 10 %igen Lösung von MAO in Toluol vorgelegt. Die Innentemperatur wurde mit einem Thermostaten auf 40°C eingestellt. Anschließend wurden 14 g Ethylen und 28,3 g Propylen zudosiert. Voraktivierung des Katalysators: 0,23 ml der Suspension aus Beispiel 9 wurde 10 Minuten mit 5 ml einer 10 %igen Lösung von MAO in Toluol bei RT gerührt. Durch Zugabe der voraktivierten Katalysatorlösung (10 µmol Titan) wurde die Polymerisation gestartet. In Semibatch-Fahrweise wurde Ethylen und Propylen im Massenverhältnis von 3 : 7 kontinuierlich zudosiert, so daß der Innendruck bei 40°C konstant 5 bar betrug. Nach 40 Minuten Polymerisationsdauer wurde die die Polymerisation mit einer 1 %igen HCl-Lösung in Methanol abgestoppt und 1 h gerührt. Das so erhaltene Polymer wurde abfiltriert, mit Methanol gewaschen, isoliert und 20 h bei 60°C im Vakuum getrocknet, wobei 49,8 g Copolymer erhalten wurden. Mit der DSC-Methode wurde ein Tg von -54°C (2. Aufheizung) ermittelt.

**Patentansprüche**

**1.** Verfahren zur Herstellung von Fulven-Metall-Insertionskomplexen, dadurch gekennzeichnet, daß man

a) einen Fulven-Metallkomplex der Formel (I)

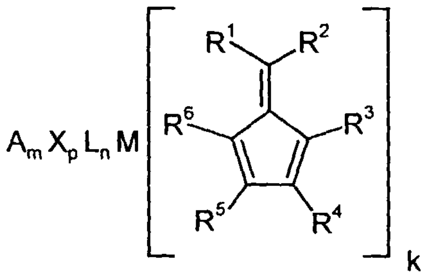

(I),

wobei

M ein Metall aus der Gruppe IIIb, IVb, Vb, VIb oder der Lanthaniden oder der Actiniden des Periodensystems der Elemente nach IUPAC ist,

A ein gegebenenfalls ein- oder mehrfach verbrückter anionischer Ligand bedeutet, wobei Cyclopentadienyl-Liganden ausgenommen sind,

X ein Wasserstoffatom, eine $C_1$- bis $C_{10}$-Alkylgruppe, eine $C_1$-bis $C_{10}$-Alkoxygruppe, eine $C_6$- bis $C_{10}$-Arylgruppe, eine $C_6$-bis $C_{10}$-Aryloxygruppe, eine $C_2$- bis $C_{10}$-Alkenylgruppe, eine $C_7$- bis $C_{40}$-Arylalkylgruppe, eine $C_7$- bis $C_{40}$-Alkylarylgruppe, eine $C_8$- bis $C_{40}$-Arylalkenylgruppe, eine $C_1$- bis $C_{10}$-Kohlenwasserstoffreste substituierte Silylgruppe, ein Halogenatom oder ein Amid der Formel $NR^7{}_2$ bedeutet,

L ein Neutralligand bedeutet,

$R^1$, $R^2$, $R^3$, $R^4$, $R^5$, $R^6$ gleich oder verschieden sind und stehen für Wasserstoff, Halogen, eine Cyanogruppe, eine $C_1$- bis $C_{20}$-Alkylgruppe, eine $C_1$- bis $C_{10}$-Fluoralkylgruppe, eine $C_6$- bis $C_{10}$-Fluorarylgruppe, eine $C_1$- bis $C_{10}$-Alkoxygruppe, eine $C_6$- bis $C_{20}$-Arylgruppe, eine $C_6$- bis $C_{10}$-Aryloxygruppe, eine $C_2$- bis $C_{10}$-Alkenylgruppe, eine $C_7$- bis $C_{40}$-Arylalkylgruppe, eine $C_7$- bis $C_{40}$-Alkylarylgruppe, eine $C_8$-bis $C_{40}$- Arylalkenylgruppe, eine $C_2$ bis $C_{10}$-Alkinylgruppe, eine durch $C_1$-$C_{10}$-Kohlenwasserstoffreste substituierte Silylgruppe, eine durch einen $C_1$-$C_{10}$-Kohlenwasserstoffrest substituierte Sulfidgruppe, eine gegebenenfalls durch $C_1$-$C_{20}$-Kohlenwasserstoffreste substituierte Aminogruppe,
oder

$R^1$, $R^2$, $R^3$, $R^4$, $R^5$, $R^6$ jeweils zusammen mit den sie verbindenden Atomen ein oder mehrere aliphatische oder aromatische Ring-systeme bilden, welche ein oder mehrere Heteroatome (O, N, S) enthalten können und 5 bis 10 Kohlenstoffatome aufweisen,

$R^7$ steht für Wasserstoff eine $C_1$- bis $C_{20}$-Alkylgruppe, eine $C_6$-bis $C_{20}$-Arylgruppe, eine $C_7$- bis $C_{40}$-Arylalkylgruppe, eine $C_7$- bis $C_{40}$-Alkylarylgruppe, eine durch $C_1$-$C_{10}$-Kohlenwasserstoffreste substituierte Silylgruppe, eine gegebenenfalls durch $C_1$-$C_{20}$-Kohlenwasserstoffreste substituierte Aminogruppe,

m, p die Zahlen 0, 1, 2, 3 oder 4 darstellen, die sich aus der Valenz und dem Bindungszustand von M ergeben, sowie

k die Zahl 1, 2 oder 3 darstellt und die Summe von k + m + p in Abhängigkeit von der Oxidationsstufe von M 1 bis 5 beträgt,

n eine Zahl von 0 bis 10 ist,

mit

b) einer ungesättigten Verbindung der Formel (II)

$$R^8{}_aR^9{}_b\,CY \quad (II),$$

wobei

$R^8$, $R^9$ gleich oder verschieden sind, ein Wasserstoffatom, ein Halogenatom, eine Hydroxygruppe, eine $C_1$- bis $C_{10}$-Alkylgruppe, eine $C_1$- bis $C_{10}$-Alkoxygruppe, eine gegebenenfalls durch Halogenatome substituierte $C_6$- bis $C_{10}$-Arylgruppe, eine $C_6$- bis $C_{10}$-Aryloxygruppe, eine $C_2$- bis $C_{10}$-Alkenylgruppe, eine $C_7$- bis $C_{40}$-Arylalkylgruppe, eine $C_7$-bis $C_{40}$-Alkylarylgruppe, eine $C_8$- bis $C_{40}$-Arylalkenylgruppe, eine gegebenenfalls durch $C_1$-$C_{20}$-Kohlenwasserstoffreste substituierte Aminogruppe oder eine gegebenenfalls durch $C_1$-$C_{20}$-Kohlenwasserstoffreste substituierte Iminogruppe bedeuten,

Y ein Stickstoffatom, ein Sauerstoffatom, ein Schwefelatom oder eine Gruppe der Formel $NR^{10}$ bedeutet, wobei $R^{10}$ die gleiche Bedeutung wie $R^8$ und $R^9$ hat und

a, b die Zahlen 0 oder 1 darstellen,

umsetzt.

**2.** Verfahren gemäß Anspruch 1, dadurch gekennzeichnet, daß

M Ti, Zr oder Hf bedeutet,

X Halogen bedeutet,

L Diethylether oder Tetrahydrofuran bedeutet,

p die Zahl 2 bedeutet,

k die Zahl 1 darstellt,

m Null ist und

n eine ganze Zahl im Bereich von 0 bis 4 ist.

**3.** Verfahren gemäß Anspruch 1, dadurch gekennzeichnet, daß

Y Sauerstoff oder Stickstoff bedeutet,

$R^8$, $R^9$ Wasserstoff und/oder $C_1$-$C_{10}$-Alkyl bedeutet.

**4.** Fulven-Metall-Insertionskomplexe herstellbar in einem Verfahren gemäß Anspruch 1.

**5.** Verfahren gemäß Anspruch 1, dadurch gekennzeichnet, daß die Fulven-Metallkomplexe der Formel (I), durch Umsetzung einer Übergangsmetallverbindung der Formel (III)

$$A_mX_sL_nM \quad (III),$$

wobei

A, X, L, M, m und n die gleiche Bedeutung wie in Anspruch 1 besitzen und

s die Zahl 2, 3, 4, 5 oder 6 bedeutet und s > p ist

mit einer Fulvenverbindung der Formel (IV)

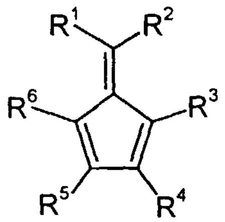

(IV),

wobei

$R^1$, $R^2$, $R^3$, $R^4$, $R^5$ und $R^6$ die gleiche Bedeutung wie in Anspruch 1 besitzen,

in Gegenwart eines Reduktionsmittels hergestellt werden.

**6.** Verfahren gemäß Anspruch 5, dadurch gekennzeichnet, daß

M Ti, Zr oder Hf bedeutet,

X Halogen bedeutet,

L Diethylether oder Tetrahydrofuran bedeutet,

m die Zahl 0 darstellt

s die Zahlen 2, 3 oder 4 bedeutet und

n eine ganze Zahl im Bereich von 0 bis 4 ist.

**7.** Verfahren gemäß Anspruch 1, dadurch gekennzeichnet, daß als Fulvenverbindung 6-Cyclohexylfulven, 6-Isopropylfulven, 6-tert-Butylfulven, 6-Phenylfulven, 6-(Dimethylamino)-fulven, 6,6-Bis(dimethylamino)fulven, 6,6-Dimethylfulven, 6,6-Bis(trifluormethyl)fulven, 6,6-Diphenylfulven, 6,6-Bis(pentafluorphenyl)fulven, 6,6-Pentamethylenfulven, 6,6-Tetramethylenfulven, 6,6-Trimethylenfulven, 2-(2,4-Cyclopentadien-1-yliden)-1,3-dithiolan, 5-Benzyliden-1,2,3-Triphenyl-1,3-cyclo-pentadien, 1,2,3,4-Tetramethylfulven, 1,2,3,4-Tetraphenylfulven, 2,3-Dimethylfulven, 2,3-Diisopropylfulven, 2,3-Diphenylfulven, 1,4-Dimethyl-2,3-diphenylfulven oder 1,4-Diethyl-2,3-diphenylfulven eingesetzt wird.

**8.** Verwendung der Fulven-Metall-Insertionskomplexe gemäß Anspruch, 4 gegebenenfalls in Kombination mit einem Co-Katalysator, als Katalysator zur Polymerisation von Olefinen und/oder Dienen oder als Hydrier-Katalysator.